# EUROPEAN PATENT APPLICATION

(11) **EP 2 574 240 A1**
(43) Date of publication of application: **03.04.2013**
(21) Application number: 12186846.7
(22) Date of filing: 01.10.2012
(51) Int. Cl.: A23L 1/211, A23L 1/212, A23L 1/30

(54) **Nutritional supplement with olives for babies**

(30) Priority: 30.09.2011 TR 201109721
(71) Applicant: Spil Teknoloji Bilisim Internet ve Web Tasarim Hizmetleri Özel Egitim Ögretim Kurumlari ve Danismanlik Elektrik Elektronik Insaa, Manisa (TR); Aydar Zeytincilik ve Tarim Ürünleri Sanayi ve Ticaret Limited Sirketi, Manisa (TR)
(72) Inventor: K???, Ak?n, MANISA (TR); AYDAR, Ayd?n, MANISA (TR)
(74) Representative: Iskender, Ibrahim

(57) **Abstract**

The current invention is about the nutritional supplement with olives that is produced as in the form ready to eat and not cereal based and as processed-cereal based powder for spoon feeding for babies after sixth month and young children.

## Description

### Technical Field

The invention is about the nutritional supplement with olives produced as in the form ready to eat and not cereal based and as processed-cereal based powder for spoon feeding for babies after sixth month and young children.

### State of the Art

Olive is a perennial, evergreen tree that is from oleaceae family, wildering in maquis in Mediterranean basin with skew, large body and abundant branches. The fruit is green at first than becomes bright black when ripen. Olive oil which is very beneficial to human health is obtained from the said fruit. But the oil is not the only thing beneficial to health in olive. Olive also contains the purest olive oil which is richer in vitamin, mineral, fiber and phenolic substances and not undergone extraction processes.

We need energy to maintain our lives. We meet our energy need from three resources as fats, proteins and carbon hydrates. Fats which have the highest energy value take an important place in meeting our energy needs. Fats have many functions in the body besides being good energy resources. Fats are the nutritional elements that must be taken in order to maintain life and for the healthy functioning of body as the fats are present in the cell, tissue, organ structures in the human body.

Towards the scientific researches performed, it has been put forth that natural olive oil contains phenolic substances that have important antioxidant, anticarcinogen features for human health. Olive oil plays an important role in Mediterranean diet. The olive oil in the Mediterranean diet can help protecting cardiovascular system, regularizing immunity system and protecting against cancer, protecting the homeostasis of the body and preventing the obesity. Many consumers that have become conscious increase the use of olive oil and try to be nourished according to Mediterranean diet.

Olive oil is used as basic oil in many meals and traditionally in homemade baby foods. Edible olive oil will be defined according to the laboratory analyses and sensory tests. Primarily olive oil is the oil that is obtained from the fruit of olive tree by applying only mechanical and physical processes such as washing, pressing, separation, centrifuge and filtration in an ambient that does not cause any change in its original characteristics, is not treated chemically; and that has colors varying between green and yellow, unique taste and odor and proper for the properties of its class by its physical, chemical and sensory characteristics and that can be consumed as food generally in its natural form. Natural olive oils are composed of four types according to the free fatty acids they contain. They are; natural extra-virgin olive oil, natural first olive oil, natural second olive oil and lampante virgin olive oil that is not appropriate directly for consumption.

Refined olive oil is the oil that is obtained by refining the lampante virgin olive oil through methods that do not cause change in the triglyceride structure, that has a clear, yellow tone and transparent appearance without deposit and that has up to 0.3 grams of free fatty acids as oleic acid in each 100 grams.

Riviera olive oil is the oil that is composed of natural olive oils which can be consumed directly as food and that has a level of free fatty acid and oleic acid up to 1 gram in each 100 grams. It is the olive oil that is obtained by the diversification by adding various spices, fruits and vegetables to the natural extra-virgin olive oil and that has up to 0.8 grams of free fatty acids as oleic acid in each 100 grams.

In the current state of the technique; the use of olives of which pungency is removed by using salt and caustic in the baby food is not appropriate for the consumption of babies and young children due to their high sodium and chemical substance content.

In literature, one of the patent applications takes place about the subject is; TR 2010/06179 numbered invention: is about an improved baby food containing an improved protein component and at least one easily digestible lipid component. In another TR 2008/10007 numbered application, there is an application about a "Temporary food menu for babies" titled baby formula. Besides these, a hydrolyzed proteic baby food is formulated in TR 2010/09494 numbered application about this subject. In the MX 2011002239 numbered patent application, there is a patent application with content of protein, fat and carbon hydrate. But no application containing nutritional supplement with olives for babies is found after the researches.

Consequently; improvements are made on the nutritional supplements for babies after sixth month and young children, therefore new structuring are needed that can eliminate the disadvantages mentioned above and solve the current systems.

### Purpose of the Invention

The current invention is about the nutritional supplement with olives that meets the aforementioned requirements, eliminates all disadvantages and bringing some additional advantages and that is produced as in the form ready to eat and not cereal based and as processed-cereal based powder for spoon feeding for babies after sixth month and young children.

The purpose of the invention is to formulate baby foods that contain whole olive and can be consumed by babies and young children.

The other purpose of the invention is to remove the pungency of the olives with apple juice, grape juice or sugar without using salt or caustic within the project.

Another purpose of the invention is that the products produced contain natural olive oil without being undergone any extraction.

A purpose of the invention is to design the invention that is suitable for the consumption of babies and young children as jar and powder baby foods.

A different purpose of the invention is to perform a production process of fluent powder baby food without lumps from the olive which is in fact an oil fruit.

The current invention which is mentioned above and to perform all advantages that can be understood from the detailed explanation below; is about the nutritional supplement produced for babies after sixth month and young children and contains olive.

In a preferred application of invention; the pungency of the said olive is removed.

In a preferred application of invention; the olive is kept in sugared water in a rate of 5-10% in weight during the removal of the pungency.

In a preferred application of invention; the said nutritional supplement is ready to eat.

In a preferred application of invention; the olive mentioned as in the ready to eat nutritional supplement is in the form of pulp.

In a preferred application of invention; the ready to eat nutritional supplement include olive pulp in a rate of 5-25%, water in 30-50%, flavorer in 20-60% and carbon hydrate source in 6-10% in weight.

In a preferred application of invention; the said flavorer contains specific and combination forms selected from the group including fruit, vegetable, vanilla, sugar and vanilin.

In a preferred application of invention; the said carbon hydrate source contains specific and combination forms selected from the group including cereals, sugar and fruit.

In a preferred application of invention; the said nutritional supplement is in the form of powder.

In a preferred application of invention; the olive mentioned as in the powder nutritional supplement is in dried form.

In a preferred application of invention; the ready to eat nutritional supplement in powder form includes dried olive in a rate of 15-30%, cereal source in 25-60%, milk protein source in 7,5-15% and flavorer in 5-23% in weight.

In a preferred application of invention; the said milk protein source contains specific and combination forms selected from the group including milk powder, whey powder and concentrated milk protein.

In a preferred application of invention; the said flavorer contains specific and combination forms selected from the group including fruit, vegetable, vanilla, sugar and vanillin.

In a preferred application of invention; the ready to eat nutritional supplement include olive pulp in a rate of 21%, water in 42%, flavorer in 30% and carbon hydrate source in 7% in weight.

In a preferred application of invention; the ready to eat nutritional supplement in powder form includes dried olive in a rate of 27%, cereal source in 47%, and concentrated milk protein in 10% and flavorer in 16% in weight.

The invention is about the production method of nutritional supplement for babies after sixth month and young children, its features includes that; olive is used in the said supplement in a preferred application.

In a preferred application of invention; it includes the process of stoning the seeds of the said olives and keeping them in sugar solution of 5% for 6 days, so removing their pungency.

In a preferred application of invention; it includes the process of running said olive through the pulper which has a 0,5 mm steel drum in order to obtain olive paste if the said nutritional supplement is a ready to eat nutritional supplement.

In a preferred application of invention; the flavorer cut and/or pulped is mixed with water and carbon hydrate source and heated up to 70-80°C.

In a preferred application of invention; the said mixture is added olive paste and homogenized under approx. 100 bar pressure 70-75°C.

In a preferred application of invention; if the said nutritional supplement is in powder form, the said non-pungent olives are stoned and dried in total of 70 hours under vacuum to be in vacuumed drying oven at 50°C for 25 hours.

In a preferred application of invention; the said dried olives are crushed with cereal source in the crusher and semi-finished good is obtained.

In a preferred application of invention; the crushed semi-finished good is mixed with milk protein source, cereal source and the flavorer pulverized.

In a preferred application of invention; the mentioned olive as in the ready to eat nutritional supplement is in the form of powder.

In a preferred application of invention; the mentioned olive as in the ready to eat nutritional supplement is in the form of particle.

The structural and characteristic features of the invention can be more clearly understood through the figures given below and the detailed explanations referring to these figures and therefore the evaluation should be made by considering these figures and the detailed explanation.

### Detailed Description of the Invention

The preferred structuring as the subject of the invention are explained only for the better understanding of the subject and in a way that does not form a limiting effect in this detailed explanation.

One type of the nutritional supplement which is the subject of the invention is ready to eat. The non-pungent olive paste is the main element of the invention. Sugar in a rate of 5-10% is used to remove the pungency of the olive. Besides this, fruit, vegetable, vanilla, vanillin and sugar can be used as flavorer. Fruit is preferred when forming the content of the invention. Several cereals, fruit, sugar and derivatives can be used as carbon hydrate source which is the other element of the invention. Rice flour is preferred when forming the content of the invention. Water which is another element in the invention is used to enable the liquidity of the content and balance the nutritional values.

One type of the nutritional supplement with olives which is the subject of the invention is in the form of powder. The said powder type is diluted by the consumer and made ready-to eat. The non-pungent, dried olive is the main element of the invention. Sugar in a rate of 5-10% is used to remove the pungency of the olive. One or more crushed cereals and/or legumes and/or plants containing starch in their body and/or roots can be used as the processed cereal source. Various hydrolyzed flours are used in forming the content of the invention. Fruit, vegetable, vanilla, vanillin and sugar can be used as flavorer that is the element of the invention. Sugar (sucrose) is preferred when forming the content of the invention. Milk powder, whey powder and concentrated milk protein can be preferred as milk protein source. Concentrated milk protein is preferred when forming the content of the invention.

### Production method of the invention:

In the ready to eat type of the nutritional supplement with olives that is the subject of the invention; the seedless olive is kept in 5% sugar solution for at least 6 days and its pungency is removed. It is run through the pulper with 0,5 mm steel drum and olive paste is obtained. The fruit cut or pulped is heated up to 70-80°C with water and rice flour. Olive paste is added to the mixture and the mixture is homogenized under 100 bar pressure at 70-75°C. Nutritional supplements are packaged. The said packages are preferably jars. The nutritional supplements are taken into jars and closed. The baby food in jars is sterilized at 121°C for 15 minutes and taken to storage at room temperature. The pungency removal process can be extended if required. Homogenization values can change or homogenization may not be applied

According to the particle sizes of the materials used in the product and the particle size required in the finished product. Heat treatment temperature and period can vary according to the pH values of the prescription and the characteristics of the material.

The most important point in the application of the invention is the use of sugar concentration in 5-10% to remove the pungency of the olive. If the foods in jars are not sterilized under 121°C for 15 minutes, filling to the jars should be made at 87-90°C' and pasteurized at minimum 85°C for 15 minutes by considering the pH value and microbiological quality.

In the powder form of the nutritional supplement with olives that is the subject of the invention; the seedless olive is kept in 5% sugar solution for at least 6 days and its pungency is removed. The non-pungent olives are stoned and dried in total of 70 hours under vacuum to be in vacuumed drying oven at 50°C for 25 hours. The said dried olives are crushed with cereal source in the crusher. The crushed semi-finished product is mixed with milk protein concentrate, hydrolyzed flour and pulverized sugar and filled in the bag packages under vacuum. The pungency removal process can be extended if required. The drying temperature and period fort he said olive can vary according to the equipment. The main purpose is to decrease the moisture level to under 5%.

## Claims

1. The invention is about the nutritional supplement produced for babies after sixth month and young children, **it is characterized in that;** it contains olive.

2. It is a nutritional supplement appropriate for claim 1, **it is characterized in that;** the pungency of the said olive is removed.

3. It is a nutritional supplement appropriate for claim 1, **it is characterized in that;** the said nutritional product is ready-to eat.

4. It is a nutritional supplement appropriate for claim 3, **it is characterized in that;** the olive mentioned as in the ready-to eat nutritional supplement is in the form of pulp.

5. It is a nutritional supplement appropriate for claim 1, **it is characterized in that;** flavorer contains specific and combination forms selected from the group including fruit, vegetable, vanilla, sugar and vanillin..

6. It is a nutritional supplement appropriate for claim 1, **it is characterized in that**; carbon hydrate source contains specific and combination forms selected from the group including cereals, sugar and fruit.

7. It is a nutritional supplement appropriate for claim 1, **it is characterized in that;** the said nutritional supplement is in the form of powder.

8. It is a nutritional supplement appropriate for claim 7, **it is characterized in that;** the olive mentioned as in the powder nutritional supplement is dried.

9. It is a nutritional supplement appropriate for claim 7, **it is characterized in that;** milk protein source contains specific and combination forms selected from the group including milk powder, whey powder and concentrated milk protein.

10. The invention is about the production method of nutritional supplement for babies after sixth month and young children, **it is characterized in that;** olive is used in the content of the mentioned food.

11. It is a production method of nutritional supplement appropriate for claim 10, **it is characterized in that;** if the said nutritional supplement is in powder form, the said non-pungent olives are stoned and dried in total of 70 hours under vacuum to be in vacuumed drying oven at 50°C for 25 hours.

12. It is a production method of nutritional supplement appropriate for claim 10, **it is characterized in that;** the said dried olives are crushed with cereal source in the crusher and semi-finished good is obtained.

13. It is a production method of nutritional supplement appropriate for claim 10, **it is characterized in that;** the crushed semi-finished good is mixed with milk protein source, cereal source and the flavorer pulverized.

14. It is a nutritional supplement appropriate for claim 3, **it is characterized in that;** the olive mentioned as in the ready-to eat nutritional supplement is in the form of powder.

15. It is a nutritional supplement appropriate for claim 3, **it is characterized in that;** the olive mentioned as in the ready-to eat nutritional supplement is in the form of particle.
